Europäisches Patentamt

(19) European Patent Office

Office européen des brevets

(11) Publication number: **0 233 087**
**B1**

(12) **EUROPEAN PATENT SPECIFICATION**

(45) Date of publication of the patent specification:
**19.12.90**

(51) Int. Cl.⁵: **F16K 1/36**, F16K 1/46

(21) Application number: **87301238.9**

(22) Date of filing: **12.02.87**

(54) Valve member.

(30) Priority: **14.02.86 US 829187**

(43) Date of publication of application:
**19.08.87 Bulletin 87/34**

(45) Publication of the grant of the patent:
**19.12.90 Bulletin 90/51**

(84) Designated Contracting States:
**AT DE LU NL SE**

(56) References cited:
**GB-A- 2 137 738**
**US-A- 2 414 908**
**US-A- 2 936 154**
**US-A- 3 084 903**
**US-A- 3 095 900**
**US-A- 3 809 362**
**US-A- 4 341 370**

(73) Proprietor: **NUPRO COMPANY, 4800 East 345 Street,
Willoughby Ohio 44094(US)**

(72) Inventor: **Scheffel, Gary William, 8384 State Route 43,
Streetsboro Ohio 44240(US)**

(74) Representative: **Jones, Colin et al, W.P. THOMPSON &
CO. Coopers Building Church Street, Liverpool
L1 3AB(GB)**

## Description

The present invention relates to valves and more particularly, to a valve member having an improved stem tip seal.

The invention is especially suited for use in a particular diaphragm type shut-off valve and will be described with reference thereto; however, the invention is capable of broader application and could be used in a variety of different valves.

Typically, shut-off valves employ a valve member having a stem tip comprising a relatively soft, resilient material mounted on the end of the valve stem for sealing cooperation with a metal valve seat. A variety of different resilient materials mounted to the stem in different ways have been used in the prior art While many of the prior art proposals have performed adequately, seal breakdown, blowout, and chipping and nibbling have been ongoing problems. In addition, certain materials having highly desirable properties, such as high lubricity and resistance to attack by chemicals and high temperature, often produce cold flow and extrusion problems when used as stem tips seals.

Accordingly, there has been an ongoing need for a stem tip seal which overcomes the noted problems while allowing a variety of seal materials to be used safely and effectively.

In US-A 2 936 154 there is described and illustrated a valve member for a shut-off valve, the valve member being of the kind adapted for axial movement towards and away from a corresponding circular valve seat and being of the kind provided with a stem tip seal which comprises a substantially cylindrical sleeve mounted on said valve member for limited axial movement relative thereto, such that a forward end of the sleeve defines an outer annular seal surface adapted for sealing engagement with the valve seat, a substantially cylindrical rigid body situated co-axially within the sleeve for axial movement relative to the valve member and the sleeve, such that a forward end of the rigid body defines an inner annular seal surface adapted for sealing engagement with the valve seat at a location radially inwardly of the outer seal surface, and a mass of resilient packing material substantially filling an annular chamber formed between the sleeve and the rigid body with the packing material extending axially outwardly from the annular chamber to define a medial annular seal surface radially between the outer and inner seal surfaces and adapted for sealing engagement with the valve seat, in which the outer cross section of the annular chamber increases in a direction away from the outer annular seal surface and the packing material fully encloses the rigid body so that pressure is generated in the packing material when the valve member is urged in a direction towards the valve seat and this pressure acts on the sleeve and on the rigid body to urge the outer and inner annular seal surfaces against the valve seat as well as the medial annular seal surface.

As described with reference to Fig. 1 of US-A 2 936 154, The outer and inner seal surfaces simultaneously engage the valve seat before any pressure is generated in the packing material and the pressure is fully relieved the packing material retreats to its initial unstressed position before any of the seal surfaces disengage.

One object of the invention is the provision of a valve member with a stem tip seal which significantly increases the life of the seal while preventing blowout, cold flow, and the like.

According to the present invention, a valve member of the above-described kind is characterised in that the medial annular seal surface is formed at the entrance to a relatively narrow annular slot and in that the sleeve and the rigid body are so configured that, on advancement of the valve member in a closing direction towards the valve seat, the inner annular sealing surface first engages the valve seat whereupon build up of pressure in the packing material urges the medial annular saling surface next into engagement with the valve seat and further advancement of the valve member further increases the pressure in the packing material which thereafter urges the outer annular sealing surface against the valve seat.

Preferably, the outer seal surface is configured to make substantially line contact with the associated valve seat after the inner and medial seal surfaces have engaged the seat.

Because the inner seal surface is located inwardly of the resilient packing material and, further, because it makes sealing contact with the valve seat prior to engagement between the packing material and the seat, the packing material is brought into engagement with the seat only after substantially all flow through the seat has ceased. Additionally, the force acting from the seat against the rigid body causes the packing material to be pressurized and move outwardly of the narrow slot into sealing engagement with the seat. This pressure also causes the outer seal surface to be held in position relative to the packing material and when the outer seal surface engages the seat the packing material is trapped in the slot in firm engagement with the seat.

The relationship between the inner rigid body and the outer sleeve ensures that the resilient packing material is totally enclosed to protect it while also preventing it from being extruded or cold flowing. In addition, as the valve is opened, the pressure on the packing material is released so that the packing material does not extrude or cold flow out of the narrow annular slot.

The invention is further described, by way of example, with reference to the accompanying drawings in which:-

Fig. 1 is a cross-sectional view of a shut-off valve incorporating a stem tip seal formed in accordance with the present invention;

Fig. 2 is a greatly enlarged cross-sectional view of the stem tip and seat area of the valve of Fig. 1; and,

Figs. 3 to 5 are partial cross-sectional views showing the stem tip seal and its relation to the associated valve seat at various points in a closing cycle of the valve.

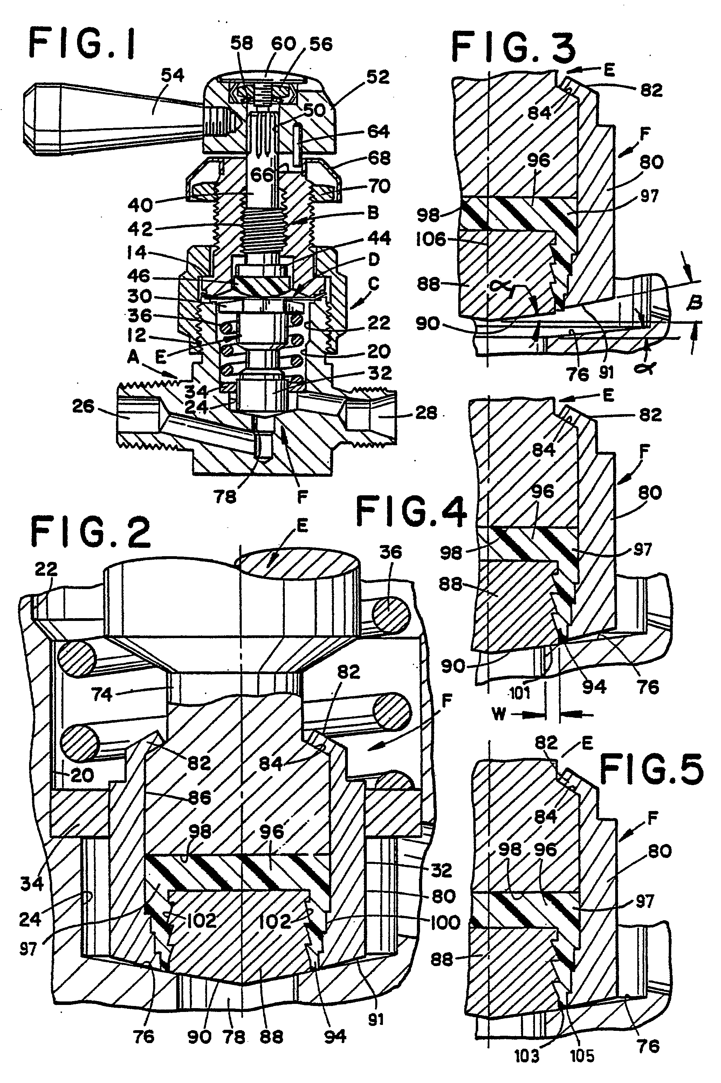

Referring now to the drawings, Fig. 1 shows a shut-off valve assembly of the general type described in GB-A-2137738. The primary difference between the valve shown in Fig. 1 and that described in the aforementioned GB-A-2137738 is with respect to the stem seal assembly which will subsequently be described in detail. The valve of Fig. 1 comprises a valve body A having a bonnet B connected thereto by a bonnet nut C. The bonnet nut C and the body A are interconnected by threads 12. Additionally, cooperating shoulders 14 are formed between the bonnet nut C and the bonnet B such that, upon tightening of bonnet nut C, the bonnet B is moved axially towards the body A. A diaphragm D is securely clamped between the upper end of body A and the lower face of bonnet B. The diaphragm D is preferably, sealingly clamped between the body and bonnet by cooperating clamp faces more fully described in GB-A-2137738.

Extending axially inwardly from the upper end of valve body A is a cylindrical bore 20 having a slightly larger outer end diameter at 22 and a reduced inner end diameter indicated generally at location 24. Inlet and outlet ports or openings 26, 28 connect from the exterior of body A through suitable passages with portion 24 of bore 20, as shown. Fluid inlet and outlet lines (not shown) can be connected to the inlet and outlet 26, 28, respectively, by any convenient known means.

Positioned centrally in bore 20 is an axially movable valve member E which has an enlarged head portion 30 slidably guided in the larger diameter portion 22 of bore 20. The outer axial end of head 30 faces towards diaphragm D and has a substantially spherical configuration. The radially outer periphery of the head 30 is substantially hexagonal so that only the corners thereof are guided from the walls of the bore portion 22.

Carried at the lower end of valve member E is a stem tip seal F. As shown, a cylindrical outer surface 32 of seal F is guided through a guide washer 34 having a cylindrical outer surface closely received in bore 20 and resting on the shoulder between the central portion of bore 20 and the smaller diameter inner end portion 24. Positioned between the guide washer 34 and the enlarged diameter head portion 30 of valve member E is a coil spring 36. The coil spring 36 acts to maintain a continuous upward bias on the valve member E to maintain the spherical upper surface of enlarged head 30 constantly in engagement with the diaphragm D.

Selective operation of the valve member E in a direction axially of the bore 20 is provided by an operating stem 40 which extends axially through the bonnet B to a position outwardly thereof. Cooperating external and internal threads 42 between stem member 40 and bonnet B serve to impart axial movement to stem 40 upon rotational movement thereof relative to the bonnet. An enlarged head 44 on the lower end of stem 40 carries a button 46 formed of plastic or other suitable material. The lower face of button 46 is convex and engages the diaphragm D on the opposite side thereof from the enlarged head 30 of valve member E.

Connected at the upper end of stem 40 by splines 50 is an operating member 52 carrying an outwardly extending handle member 54. Operating member 52 is secured to the end of stem 40 by a nut 56 and a lock washer 58. A cover plate 60 snaps into a circular recess in the top of operating member 52 in a known manner.

Associated with the operating member 52 and extending downwardly therefrom is a stop pin 64 which is received in an arcuate groove 66 formed in the upper end of bonnet B. Groove 66 is sized to limit the total range of movement of the operating member 52. Also associated with the operating member 52 and carried at the upper end of the bonnet B is an indicating ring or sleeve member 68 which cooperates with suitable indicia or a pointer carried on operating member 52 to give a visual indication of the position of the valve. In addition, bonnet B is provided with a panel nut 70 which can be used for mounting the valve through a suitable panel opening (not shown).

As mentioned earlier, the apparatus thus far described is shown and described in greater detail in GB-A-2137738. Of importance to the present invention is, however, the arrangement of the stem tip seal F. As best shown in Fig. 2, the stem tip seal F is carried at the reduced diameter lower end portion 74 of valve member E and is arranged to sealingly cooperate with an annular valve seat 76 defined by the bottom wall of portion 24 of bore 20 circumferentially about an axial inlet passage 78. Passage 78 of bore 20 is connected, as shown in Fig. 1, with the inlet port 26.

In the embodiment under consideration, the stem tip seal F includes an outer, imperforate cylindrical sleeve 80 which is closely but slidably received on the lower end of valve member E. Preferably, sleeve 80 is formed of metal, such as stainless steel, and is retained on valve member E by a pair of tabs 82 which are deformed over the outwardly extending shoulder 84.

Positioned centrally of the sleeve 80 and axially aligned with valve member E and the valve seat 76 is a relatively rigid insert body 88 having a circular forward or lower face 90 of a maximum diameter slightly greater than the diameter of passage 78 and slightly less than the inner diameter of the lower end of sleeve 80. Thus, as illustrated, the insert body 88, in combination with the sleeve 80, defines a narrow slot 94 which extends circumferentially of the lower end face of the seal F. The slot 94 opens inwardly to a chamber 96 defined by the lower end face 98 of valve member E, the inner wall of sleeve 80 and the outer side and top surfaces of insert body 88.

The chamber 96 is totally filled with a suitable resilient, elastomeric packing or seal material 97, such as polytetrafluoroethylene.

For reasons which will subsequently become apparent, the lower portion of the internal wall of sleeve 80 is provided with a series of steps or serrations 100 which are arranged to cause the chamber 96 to have a gradually decreasing diameter in a direction towards the valve seat 76. The outer surface of the inert body 88 is similarly provided with reversely oriented serrations or shoulder portions 102.

To assemble the tip seal thus far described, the packing material 97 is preformed into a cup shape with its outer surface shaped to conform to the steps or serrations 100 of sleeve 80 and its inner diameter sized to the maximum diameter of insert body 88. The cupshaped mass of packing or seal material 97 is then slid into sleeve 80 from its upper end and the assembly comprising the sleeve and the packing material are slid onto the lower end of valve member E substantially to the position shown. Thereafter the insert body 88 is slid axially into position in the packing material 97. With the insert body in position, a substantially axial force is applied to lower face 90 of insert body 88.

As is apparent, with the arrangement thus far described, forces acting axially against lower face 90 of insert body 88 generate pressure within the packing material 97. This causes the packing material to mould about the insert body 88 and to tend to move downwardly through annular slot 94. Additionally, the internal pressures acting against the sleeve 80 produce a resultant force tending to move sleeve 80 downwardly on valve member E. When the packing material has been suitably pressurized and moulded about the insert body 88, the tabs 82 of sleeve 80 are bent or deformed over the shoulder 84 and the stem tip seal is in its assembled, operative condition.

Referring to Fig. 3, the stem tip seal F is shown in an open position vertically spaced from the valve seat 76. Preferably, the valve seat 76 has a substantially conical configuration and forms an angle $\alpha$ of approximately 7 1/2° relative to a plane perpendicular to the axis 106 of the stem tip seal F. The lower face 90 of the insert body 88 forms an inner annular seal surface 101 and preferably has a conical configuration which lies at an angle $\alpha_1$ relative to a plane perpendicular to axis 106. Angle $\alpha_1$ is preferably also approximately 7 1/2° so that the surface 90 is substantially parallel to the valve seat 76. The lower end surface of sleeve 80 forms an outer annular seal surface 91 and also has a substantially conical configuration and lies at an angle $\beta$ which is preferably approximately 15° relative to the plane perpendicular to axis 106.

As the stem tip seal F is moved axially towards valve seat 76, engagement between the seat 76 and the tip seal first takes place at a narrow annular band which is between the inner seal surface 101 on the insert body 88 and the seat 76. Preferably, this band (101) has a width W in the range of 1.27mm (0.050 inch) or less.

With continued downward movement of valve member E, the sealing pressure along band (101) increases and the pressure within the resilient material 97 in chamber 96 is increased, causing the packing material to extend through slot 94 so that a medial annular seal surface 103 on the packing material 97 comes into engagement with seat 76 in a narrow annular band about the insert body 88. Preferably, the insert body 88 and the sleeve 80 are sized such that this band (103) has a width in the range of approximately 0.254mm (0.010 inch) to 0.508mm (0.020 inch).

With continued downward pressure on valve member E, and the generation of increased pressure within the packing material 97 in chamber 96, the sealing pressure between the valve seat 76 and the medial seal surface 103 at slot 94 continues to increase and the sleeve 80 finally makes line contact as shown in Fig. 5 and indicated by the point 105. This line contact is complete about the outer periphery of the medial seal surface 103 on the resilient packing material extending through slot 94. The packing material is thus totally confined between the insert body 88 and the sleeve 80, while engaging the valve seat 76 with substantial force.

The relationship between the insert body 88 and the sleeve 80 thus totally confines the packing material 97 and prevents it from cold flowing even though it is contacting valve seat 76 with a relatively high sealing pressure.

## Claims

1. A valve member for a shut-off valve, the valve member (E) being adapted for axial movement towards and away from a corresponding circular valve seat (76) and being provided with a stem tip seal (F) which comprises a substantially cylindrical sleeve (80) mounted on said valve member (E) for limited axial movement relatively thereto, such that a forward end of the sleeve (80) defines an outer annular seal surface (91) adapted for sealing engagement with the valve seat (76), a substantially cylindrical rigid body (88) situated co-axially within the sleeve (80) for axial movement relative to the valve member (E) and the sleeve (80), such that a forward end of the rigid body (88) defines an inner annular seal surface (101) adapted for sealing engagement with the valve seat (76) at a location radially inwardly of the outer seal surface (91), and a mass of resilient packing material (97) substantially filling an annular chamber (96) formed between the sleeve (80) and the rigid body (88) with the packing material (97) extending axially outwardly from the annular chamber (96) to define a medial annular seal surface (103) radially between the outer and inner seal surfaces (91, 101) and adapted for sealing engagement with the valve seat (76), in which the outer cross section of the annular chamber (96) increases in a direction away from the outer annular surface (91) and the packing material (97) fully encloses the rigid body (88) so that pressure is generated in the packing material (97) when the valve member is urged in a direction towards the valve seat (76) and this pressure acts on the sleeve (80) and on the rigid body (88) to urge the outer and inner annular seal surfaces (91, 101) against the valve seat (76) as well as the medial annular seal surface (103), characterised in that the medial annular seal surface (103) is formed at the entrance to a relatively narrow annular slot (94) and in that the sleeve (80) and the rigid body (88) are so configured that, on advancement of the valve member (E) in a closing direction towards the valve seat (76), the inner annular sealing surface (101) first engages the valve seat (76) whereupon build up of pressure in the packing material (97) urges the medial annular sealing surface (103) next into engagement with the valve seat (76) and further advancement of the valve member (E) further increases the pressure in the packing material (97) which thereafter urges the outer annular sealing surface (91) against the valve seat (76).

2. A valve member according to claim 1, wherein said outer annular seal surface (91) is configured to make substantially line contact (105) with the said associated seat (76).

3. A valve member according to claim 1 or 2, wherein said inner and outer seal surfaces (101, 91) have a substantially conical configuration.

4. A valve member according to claim 3, wherein said inner seal surface (101) and said outer seal surface (91) are both inclined in a radial direction at different angles relative to one another.

5. A valve member according to any of claims 1 to 4, wherein the radial exterior of said rigid body (88) has an axial series of circumferential grooves (102).

6. A valve member according to claim 5, wherein the interior of said sleeve (80) has an axial series of circumferential grooves (100) facing the circumferential grooves (102) on said rigid body (88).

7. A valve member according to any of claims 1 to 6, including means (82) for limiting the axial outward movement of said sleeve (80).

8. A valve member according to any of claims 1 to 7, wherein said inner and medial annular seal surfaces (101, 103) each have a width in the range of 0.127mm (0.050 inch) or less.

**Patentansprüche**

1. Ventilelement für ein Absperrventil, wobei das Ventilelement (E) zur axialen Bewegung in Richtung auf einen entsprechenden kreisförmigen Ventilsitz (76) und von diesem weg ausgebildet und mit einer Schaftspitzendichtung (F) ausgerüstet ist, die eine an dem Ventilelement (E) für eine begrenzte Axialbewegung diesem gegenüber, derart daß ein vorderes Ende der Hülse (80) eine zum Dichteingriff mit dem Ventilsitz (76) ausgebildete äußere ringförmige Dichtoberfläche (91) bildet, angeordnete im wesentlichen zylindrische Hülse (80), einen koaxial in der Hülse (80) zur Axialbewegung gegenüber dem Ventilelement (E) und der Hülse (80) angeordneten im wesentlichen zylindrischen starren Körper (88), derart daß ein vorderes Ende des starren Körpers (88) eine zum Dichteingriff mit dem Ventilsitz (76) an einer Stelle radial innerhalb der äußeren Dichtoberfläche (91) ausgebildete innere ringförmige Dichtoberfläche (101) bildet, sowie eine Masse von nachgiebigen Packungsmaterial (97) aufweist, das eine zwischen der Hülse (80) und dem starren Körper (88) gebildete ringförmige Kammer (96) im wesentlichen ausfüllt und sich axial von der ringförmigen Kammer (96) nach außen erstreckt, um eine mittlere ringförmige Dichtoberfläche (103) radial zwischen der äußeren und der inneren Dichtoberfläche (91, 101) zu bilden, die zum Dichteingriff mit dem Ventilsitz (76) ausgebildet gebildet ist, wobei der äußere Querschnitt der ringförmigen Kammer (96) sich in einer Richtung weg von der äußeren ringförmigen Oberfläche (91) vergrößert und das Packungsmaterial (97) den starren Körper (88) vollständig einschließt, so daß Druck in dem Packungsmaterial (97) erzeugt wird, wenn das Ventilelement in Richtung auf den Ventilsitz (76) gedrückt wird, und dieser Druck auf die Hülse (80) und auf den starren Körper (88) wirkt, um die äußere und innere ringförmige Dichtoberfläche (91, 101) gegen den Ventilsitz (76) ebenso wie die mittlere ringförmige Dichtoberfläche (103) zu drücken, dadurch gekennzeichnet, daß die mittlere ringförmige Dichtoberfläche (103) an dem Eingang zu einem relativ engen ringförmigen Schlitz (94) gebildet ist und daß die Hülse (80) und der starre Körper (88) so konfiguriert sind, daß bei Vorwärtsbewegung des Ventilelements (E) in Schließrichtung in Richtung auf den Ventilsitz (76) die innere ringförmige Dichtoberfläche (101) zunächst an dem Ventilsitz (76) angreift, wonach der Aufbau von Druck in dem Packungsmaterial (97) die mittlere ringförmige Dichtoberfläche (103) als nächstes in Eingriff mit dem Ventilsitz (76) drückt und ein weiteres Vorwärtsbewegen des Ventilelementes (E) weiter den Druck in dem Packungsmaterial (97) erhöht, das anschließend die äußere ringförmige Dichtoberfläche (91) gegen den Ventilsitz (76) drückt.

2. Ventilelement nach Anspruch 1, bei dem die äußere ringförmige Dichtoberfläche (91) so konfiguriert ist, daß sie mit dem zugeordneten Sitz (76) im wesentlichen eine Linienberührung (105) durchführt.

3. Ventilelement nach Anspruch 1 oder 2, bei die innere und äußere Dichtoberfläche (101, 91) im wesentlichen konische Ausbildung aufweisen.

4. Ventilelement nach Anspruch 3, bei dem die innere Dichtoberfläche (101) und die äußere Dichtoberfläche (91) beide in einer radialen Richtung mit voneinander unterschiedlichen Winkeln geneigt verlaufen.

5. Ventilelement nach einem der Ansprüche 1 bis 4, bei dem die radiale Außenseite des starren Körpers (88) eine axiale Folge von Umfangsnuten (102) aufweist.

6. Ventilelement nach Anspruch 5, bei dem die Innenseite der Hülse (80) eine axiale Folge von Umfangsnuten (100) aufweist, die den Umfangsnuten (102) an dem starren Körper (88) gegenüberliegen.

7. Ventilelement nach einem der Ansprüche 1 bis 6, enthaltend Mittel (82) zur Begrenzung der axialen Bewegung der Hülse (88) nach außen.

8. Ventilelement nach einem der Ansprüche 1 bis 7, bei dem die innere und mittlere ringförmige Dichtoberfläche (101,103) jeweils eine Breite im Bereich von 0,127mm (0,05 Zoll) oder weniger aufweisen.

**Revendications**

1. Soupape pour robinet d'arrêt, la soupape (E) étant agencée pour se déplacer axialement en se rapprochant et s'écartant d'un siège de soupape circulaire (76) et étant munie d'un joint (F) d'extrémité de tige qui comporte un manchon (80) sensiblement cylindrique monté sur ladite soupape (E) avec déplacement axial limité par rapport à elle, tel qu'une extrémité avant du manchon (80) définit une surface de joint (91) annulaire externe, agencée pour venir en contact étanche avec le siège de soupape (76), un corps rigide (88) sensiblement cylindrique, disposé coaxialement dans le manchon (80) pour se déplacer axialement par rapport à la soupape (E) et au manchon (80) de telle sorte qu'une extrémité avant du corps rigide (88) définit une surface de joint (101) annulaire intérieure agencée pour venir en contact étanche avec le siège de soupape (76) en un emplacement radialement à l'intérieur de la surface de joint (91) externe, et une masse de matière de garniture élastique (97) remplissant sensiblement une chambre annulaire (96) formée entre le manchon (80) et le corps rigide (88), la matière de garniture (97) s'étendant axialement vers l'extérieur de la chambre annulaire (96) pour définir une surface de joint (103) annulaire médiane, radialement entre les surfaces de joint externe et interne (91, 101) et agencée pour venir en contact étanche avec le siège de soupape (76) où la section extérieure de la chambre annulaire (96) augmente en s'écartant de la surface annulaire externe (91) et la matière de garniture (97) entoure complètement le corps rigide (88) de sorte que de la pression est générée dans la matière de garniture (97) quand la soupape est rappelée vers le siège de soupape (76) et cette pression agit sur le manchon (80) et sur le corps rigide (88) pour rappeler les surfaces de joint annulaires interne et externe (101, 91) contre le siège de soupape (76), de même que la surface de joint annulaire médiane (103) caractérisée par le fait que la surface de joint annulaire médiane (103) est formée à l'entrée d'une fente annulaire (94) relativement étroite et que le manchon (80) et le corps rigide (88) sont configurés de manière que, lorsque la soupape (E) avance en direction de fermeture vers le siège de soupape (76), la surface de joint annulaire interne (101) vient la première en contact avec le siège de soupape (76) après quoi la génération de pression dans la matière de garnissage (97) rappelle la surface de joint annulaire médiane (103) ensuite en contact avec le siège de soupape (76) et la poursuite de l'avance de la soupape (E) augmente encore la pression dans la matière de garnissage (97) qui rappelle alors la surface de joint annulaire externe (91) contre le siège de soupape (76).

2. Soupape selon la revendication 1 dans laquelle ladite surface de joint annulaire externe (91) est configurée pour assurer un contact (105) sensiblement linéaire avec ledit siège associé (76).

3. Soupape selon la revendication 1 ou 2, dans laquelle lesdites surfaces de joint interne et externe (101, 91) ont une configuration sensiblement conique.

4. Soupape selon la revendication 3, dans laquelle ladite surface de joint interne (101) et ladite surface de joint externe (91) sont toutes deux inclinées en direction radiale suivant des angles différents l'un de l'autre.

5. Soupape selon l'une des revendications 1 à 4, dans laquelle 1, extérieur radial dudit corps rigide (88) présente une série axiale de rainures circonférentielles (102).

6. Soupape selon la revendication 5, dans laquelle l'intérieur dudit manchon (80) présente une série axiale de rainures circonférentielles (100) faisant face aux rainures circonférentielles (102) sur ledit corps rigide (88).

7. Soupape selon l'une des revendications 1 à 6, comprenant un moyen (82) de limitation du déplacement axial vers l'extérieur dudit manchon (80).

8. Soupape selon l'une des revendications 1 à 7, dans laquelle lesdites surfaces de joint annulaires interne et médiane (101, 103) ont chacune une largeur dans la zone de 0,127 mm (0,050 inch) ou moindre.

FIG.1

FIG.2

FIG.3

FIG.4

FIG.5